# EUROPÄISCHE PATENTSCHRIFT

(11) **EP 1 784 606 B1**
(45) Veröffentlichungstag und Bekanntmachung des Hinweises auf die Patenterteilung: **30.12.2020**
(21) Anmeldenummer: 05783368.3
(22) Anmeldetag: 30.08.2005
(51) Int. Cl.: F24C 15/20, B01D 46/00

(54) **Wrasenerfassungseinrichtung**
Cooking fumes collector
Dispositif de captage de buées de cuisson

(30) Priorität: 31.08.2004 DE 102004042158
(43) Veröffentlichungstag der Anmeldung: 16.05.2007
(60) Teilanmeldung: 10173603.1 / 2 256 418
(73) Patentinhaber: Maier, Max, 71636 Ludwigsburg (DE)
(72) Erfinder: EBERHARD, Jürgen, 71726 Benningen (DE)
(74) Vertreter: Schumacher & Willsau
(86) Internationale Anmeldenummer: PCT/EP2005/009345
(87) Internationale Veröffentlichungsnummer: WO 2006/024499

(56) Entgegenhaltungen:
- WO-A-2005/100863
- DE-A1- 2 656 564
- DE-A1- 2 818 771
- DE-A1- 4 322 662
- DE-A1- 4 410 884
- DE-A1- 10 216 012
- FR-A1- 2 537 020
- GB-A- 888 823
- JP-A- 2002 058 603
- JP-A- 2002 143 286
- US-A- 3 926 171
- US-A- 5 133 786
- PATENT ABSTRACTS OF JAPAN Bd. 2000, Nr. 26, 1. Juli 2002 (2002-07-01) & JP 2001 245794 A (NORITAKE CO LTD; TOOTEKU JAPAN:KK; YAMAOKA KINZOKU KOGYO KK), 11. September 2001 (2001-09-11)
- PATENT ABSTRACTS OF JAPAN Bd. 2003, Nr. 12, 5. Dezember 2003 (2003-12-05) & JP 2004 097708 A (SHINPO CO LTD), 2. April 2004 (2004-04-02)
- PATENT ABSTRACTS OF JAPAN Bd. 2000, Nr. 07, 29. September 2000 (2000-09-29) & JP 2000 116531 A (SHINPO CO LTD; MATSUSHITA SEIKO CO LTD), 25. April 2000 (2000-04-25)

## Beschreibung

Die Erfindung betrifft eine Wrasenerfassungseinrichtung der im Oberbegriff des Patentanspruchs 1 angegebenen Art.

Grundsätzlich ist eine solche Wrasenerfassungseinrichtung an Arbeitsplätzen aller Art einsetzbar, an denen Luft mit Gerüchen und gegebenenfalls zusätzlich mit Fett oder Partikeln beladen wird, also z.B. an Arbeitsplätzen in Küchen, Ausgabeanlagen, Werkstätten, Laboratorien oder gar anatomischen oder gerichtsmedizinischen Instituten.

Ein Beispiel für einen Küchenarbeitsplatz ist eine aus der EP 0 915 299 B1 bekannte Speisenzubereitungseinheit, die mit einer solchen Wrasenerfassungseinrichtung versehen und in eine Zubereitungs- und Verkaufstheke integriert ist und auf die weiter unten näher eingegangen wird.

Nach einem "Merkblatt für Großküchen-Geräte mit integrierter Wrasenerfassungseinrichtung, die nicht mit der Raumlufttechnischen-Anlage gekoppelt sind", Nr. F5-2N056, herausgegeben vom Industrieverband Haus-, Heiz- und Küchentechnik e.V., Juli 2004, sind integrierte Wrasenerfassungseinrichtungen, die über thermischen Großküchengeräten oder über thermischen Geräten im Ausgabebereich angebracht sind, nicht mit der Küchenbe- und Entlüftunsanlage gekoppelt. Eine integrierte Wrasenerfassungseinrichtung ist keine raumluftechnische Anlage (RLT-Anlage) im Sinne von VDI 2052 "Raumlufttechnische Anlagen für Küchen" und kann diese auch nicht ersetzen. Nach dem Merkblatt sind integrierte Wrasenerfassungseinrichtungen über Großküchengeräten und dem dort entstehenden Wrasenstrom positioniert, und Geräte, bei denen solche integrierten Wrasenerfassungseinrichtungen verwendet werden können, sind alle thermischen Großküchengeräte und thermischen Geräte in Ausgabeanlagen. Nach diesem Merkblatt ist bei bodennahen Abluftöffnungen eine horizontale induktionsarme Luftführung vorzusehen. In Verbindung mit VDI 2052 besagt diese Bestimmung, dass die mittlere Luftgeschwindigkeit hinter Abluftöffnungen nicht größer als 0,6 m/s sein sollte, weil nämlich ab diesem Wert bereits von Zugluft gesprochen werden kann, die Staub aufwirbelt, an den thermischen Geräten arbeitende Personen frieren lässt und andere Behaglichkeitseinbußen für diese Personen mit sich bringt.

Die gesundheitstechnischen Anforderungen für die Behaglichkeit von Personen im Aufenthaltsbereich von Räumen bei verschieden schwerer körperlicher Tätigkeit sind in DIN 1946, Teil 2, Januar 1994 definiert. Danach sollen RLT-Anlagen für Aufenthaltsräume von Personen ein behagliches Raumklima und eine gesundheitlich verträgliche Raumluft schaffen. DIN 1946 gibt mit Bild 2 auf Seite 3 Werte von mittleren Luftgeschwindigkeiten als Funktion von Temperatur und Turbulenzgrad der Luft im Behaglichkeitsbereich vor. Danach sollte bei einem Turbulenzgrad bis minimal 5 % und einer Lufttemperatur von 20 bis 27° C die mittlere Luftgeschwindigkeit einen Wert von etwa 0,43 m/s nicht übersteigen. Aus Bild 2 kann für 28° C und bei einem Turbulenzgrad von 5 % der oben bereits genannte Wert der mittleren Luftgeschwindigkeit von 0,6 m/s extrapoliert werden. Nun ist, wie oben dargelegt, eine integrierte Wrasenerfassungseinrichtung zwar keine RLT-Anlage, sie wird jedoch in Verbindung mit solchen RLT-Anlagen eingesetzt und sollte Abluft erzeugen, deren mittlere Luftgeschwindigkeit zumindest den vorgenannten Maximalwert von 0,6 m/s nicht überschreitet, um wie die RLT-Anlage im Behaglichkeitsbereich zu arbeiten. Andernfalls träte der Fall ein, dass im Aufenthaltsbereich von Räumen tätige Personen zwar nicht durch die RLT-Anlage in ihrer Behaglichkeit beeinträchtigt werden, wohl aber durch die Wrasenerfassungseinrichtung. Bei bekannten Wrasenerfassungseinrichtungen brauchte bislang auf eine horizontale induktionsarme Luftführung noch nicht geachtet werden. Es gibt nun aber seit dem Jahre 2004 eine Richtlinie, die eine solche Luftführung zumindest für Wrasenerfassungseinrichtungen vorgibt, wie das eingangs erwähnte Merkblatt zeigt.

Bei der aus der eingangs bereits genannten EP 0 915 299 B1 bekannten Speisenzubereitungseinheit besteht die Absaugöffnung aus Absaugschlitzen, die auf drei Seiten einer Zubereitungseinrichtung, wo der Wrasen entsteht, angeordnet sind. Als Filtereinrichtung ist eine Filtereinheit unterhalb der Zubereitungseinrichtung angeordnet, und zwar derart, dass das gleichfalls unterhalb der Zubereitungseinrichtung angeordnete Sauggebläse die Abluft von der Zubereitungseinrichtung durch entsprechende Führungen absaugt und dann durch die Filtereinheit hindurch saugt, woraufhin die Abluft durch das Sauggebläse hindurch nach außen gefördert wird. Vorzugsweise besteht die Filtereinheit aus zwei im Wesentlichen identischen Einheiten, die beidseitig des Gebläses angeordnet sind. Jede dieser beiden identischen Einheiten besteht aus mehreren im Wesentlichen vertikal angeordneten Platten mit unterschiedlichen Filtereigenschaften, zum Beispiel aus einem Vlies zum Abfangen von Wasserdampf und Feuchtigkeit gefolgt von einer Platte aus Filtermaterial, welches die Funktion eines Fettfilters hat, und dahinter von noch einer oder mehreren weiteren Filterplatten, die Aktivkohle als Filtermaterial enthalten, um flüchtige und geruchbildende Stoffe aus der Abluft heraus zu filtern. Die Abluftöffnung befindet sich im Boden eines Gehäuses, in welchem die Wrasenerfassungseinrichtung untergebracht ist, und leitet die Abluft abwärts auf den Boden eines Raums, in dem die Speisenzubereitungseinheit aufgestellt ist. Wenn es sich um einen abgeschlossenen Raum handelt, wird die Abluft als Umluft in den Raum zurückgegeben. Das Sauggebläse ist direkt an die Abluftöffnung angeschlossen. Da der Wrasen an der Zubereitungseinrichtung auf drei Seiten abgesaugt und durch zwei Filtereinheiten hindurch gesaugt werden muss, zwischen denen das Sauggebläse angeordnet ist, muss das Sauggebläse notwendigerweise eine hohe Förderleistung haben, was unvermeidlich zur Folge hat, dass der Wert der mittleren Luftgeschwindigkeit an der bodennah angeordneten Abluftöffnung wesentlich größer als der oben genannte Wert von 0,6 m/s sein wird.

Aus der EP 1 194 721 B1, die auf den Anmelder zurückgeht, ist eine Luftabsaugvorrichtung für einen Arbeitsplatz, insbesondere einen, an dem Lebensmittel mit Wärme beaufschlagt werden, bekannt, die der Wrasenerfassungseinrichtung nach dem Oberbegriff des Patentanspruchs 1 gleicht. Diese bekannte Luftabsaugvorrichtung unterscheidet sich von der Wrasenerfassungseinrichtung der Speisenzubereitungseinheit nach der EP 0 915 299 B1 insbesondere dadurch, dass mit Wrasen beladene Luft nur über eine einzelne Absaugöffnung auf einer Seite eines Arbeitsplatzes, nämlich einer Speisenzubereitungseinrichtung abgesaugt wird und dass gegenüber der Absaugöffnung ein Blasluftschlitz angeordnet ist, durch den Luft über den Arbeitsplatz in Richtung zu der Absaugöffnung geblasen wird, um über dem Arbeitsplatz einen Luftschleier zu erzeugen. Das Gebläse, das bei dieser bekannten Luftabsaugvorrichtung nicht hinter sämtlichen Filtern wie bei der Speisenzubereitungseinheit nach der EP 0 915 299 B1 angeordnet ist, sondern zwischen einem als Fettfilter ausgebildeten Vorfilter und dem Geruchsfilter, fördert die Luft in einen zu dem Blasluftschlitz führenden Raum, in welchem notwendigerweise ein hoher Druck aufgebaut werden muss. In einem Bereich dieses Raums, der sich stromabwärts des Geruchsfilters befindet, ist ein Luftablass vorgesehen, über den ein Teil des von dem Gebläse erzeugten Luftstroms als Umluft in den Raum gelangt, und zwar mit einer mittleren Luftgeschwindigkeit, deren Wert ebenfalls wesentlich größer als der oben genannte Wert von 0,6 m/s sein wird.

Aus dem deutschen Gebrauchsmuster Nr. 73 39 571 ist ein Geruchsvernichter für Grillschwaden, Kochschwaden od. dgl., insbesondere für Hähnchengrills, bekannt, der aus einem Auffanggehäuse mit Ansaugkanal, Gebläse und Filtereinsatz besteht. Der Filtereinsatz ist aus einem Vorfilter als Fettfilter und einem Hauptfilter als Geruchsfilter aufgebaut. Zwischen den beiden Filtern ist das Gebläse angeordnet. Vor dem Vorfilter ist in dem Ansaugkanal eine Drosselklappe angeordnet. Mittels der Drosselklappe kann die angesaugte Luft- oder Schwadenmenge eingestellt werden. Darüber hinaus kann die Grill- oder Kochtemperatur mit der Drosselklappe eingestellt werden, da diese mit einer Einstellvorrichtung für die Grilltemperatur synchron geschaltet ist. Mit der Drosselklappe ließe sich zwar, obgleich das in dem deutschen Gebrauchsmuster nicht angesprochen ist, theoretisch die mittlere Luftgeschwindigkeit hinter dem Geruchsfilter steuern, jedoch wird in der Praxis mit zunehmendem Schließen der stromaufwärts der Filter und des Gebläses angeordneten Drosselklappe das von dem Grill abgesaugte Luftvolumen zunehmend verringert und dadurch auch die Schwadenerfassung zunehmend verringert.

Aus der DE 199 61 785 A1 ist eine Dunstabzugsvorrichtung bekannt, die einer Wrasenerfassungseinrichtung der eingangs genannten Art gleicht. Bei dieser bekannten Dunstabzugsvorrichtung ist ein erstes Gebläse in einer Kammer untergebracht, die einen Reinluftauslass hat, welcher durch einen Geruchsfilter abgedeckt ist. Eine Steuerung der mittleren Luftgeschwindigkeit der den Reinluftauslass verlassenden Abluft ist bei dieser bekannten Dunstabzugsvorrichtung weder vorgesehen noch ohne weiteres möglich. Vielmehr wird dort angestrebt, den Wirkungsgrad des Geruchsfilters zu verbessern. Zu diesem Zweck ist eine Wärmetauschauervorrichtung vorgesehen, die dazu dient, den Dunstabzugsluftstrom durch einen Kühlluftstrom zu kühlen.

Die US 3 926 171 A, auf der der Oberbegriff des Anspruchs 1 basiert, betrifft einen Sockel für einen belüfteten Herd. Der Rahmen des Sockels ist offen und praktisch aus allen Richtungen für einen Techniker zugänglich (ausgenommen dann, wenn Seitenplatten installiert sind), so dass eine Abluftleitung leicht in der gewünschten Anordnung installiert werden kann.

In dem Rahmen des Sockels kann die Abluftleitung, die ins Freie führt, in verschiedenen Anordnungen installiert werden. Bei einer Umlaufvariante ist innerhalb des Rahmens des Sockels ein Blechkanal installiert, der Luft aus dem belüfteten Herd sammelt und über eine Filtereinrichtung zurück in den Raum leitet. Der Abluftkanal hat eine rechteckige Öffnung, die sich im Wesentlichen quer über die Frontseite des Sockels erstreckt. Der Kanal hat einen Boden. Der Sockel selbst hat keinen Boden, sondern ist einfach nach unten offen. Der Sockel oder dessen Rahmen dient somit lediglich als Halter für den Kanal. Der Sockel ist ein leeres Gebilde, in welches der Kanal eingebaut ist.

Bei dem Herd wird sowohl von oben her abgesaugt als auch aus dem Inneren des Backofens. Ein Fettfilter kann daher nicht unmittelbar neben der oberen Absaugöffnung angeordnet werden, sondern muss zwangsläufig neben der unteren Absaugöffnung (auf der Rückseite des Backofens) angeordnet werden.

Das Dokument JP 2002 143286 A betrifft eine kleine und kompakte Deodorierungsvorrichtung mit einer großen Saugfläche. Die Deodorierungsvorrichtung hat einen kastenartigen Körper, in dessen Wänden Öffnungen gebildet sind, auf denen Deodorierungsfilter austauschbar angebracht sind. Ein Axialgebläse ist im Inneren des Körpers angeordnet. Nur die dem Gebläse zugewandte Öffnung wird als Auslassöffnung benutzt, alle anderen Öffnungen werden als Einlassöffnungen benutzt.

Aufgabe der Erfindung ist es, eine Wrasenerfassungseinrichtung der im Oberbegriff des Patentanspruchs 1 angegebenen Art so auszubilden, dass sich die mittlere Luftgeschwindigkeit von die Wrasenerfassungseinrichtung verlassender Abluft auf einfache Weise so steuern lässt, dass weder die Behaglichkeit in dem umgebenden Raum noch die Lufterfassung beeinträchtigt wird.

Diese Aufgabe ist erfindungsgemäß durch eine Wrasenerfassungseinrichtung mit den im Patentanspruch 1 angegeben Merkmalen gelöst.

Mit der Wrasenerfassungseinrichtung nach der Erfindung ist ein Arbeitsplatz, an dem verunreinigte Luft zu erfassen ist, von vorn herein ausgerüstet oder nachträglich ausrüstbar. Dazu ist das Kanalsystem mit der Absaugöffnung von vorn herein in den Arbeitsplatz so integriert, dass sich die Absaugöffnung auf Höhe des Arbeitsplatzes befindet, oder lässt sich das gesamte Kanalsystem nachträglich so mit dem Arbeitsplatz kombinieren, dass die Absaugöffnung auf Höhe des Arbeitsplatzes positioniert wird. In beiden Fällen lässt sich dann der Wert der mittleren Luftgeschwindigkeit stromabwärts der Abluftöffnung auf einfache Weise steuern, insbesondere zum Beispiel auf den eingangs erwähnten niedrigen Wert von höchstens 0,6 m/s einstellen, indem stromabwärts von dem Gebläse erfindungsgemäß eine Abluftbox eingesetzt wird, die Seitenflächen hat, wobei eine der Seitenflächen eine Lufteinströmöffnung aufweist, mit der die stromabwärtige Seite des Gebläses verbunden ist, und wobei die übrigen Seitenflächen wahlweise jeweils als eine durch einen Geruchsfilter mit wählbarem Luftwiderstand abdeckbare oder abgedeckte Abluftöffnung ausgebildet sind. Die Größe der Abluftöffnung lässt sich dabei leicht variieren, indem eine Seitenfläche oder, vorzugsweise, mehrere Seitenflächen der Abluftbox mit Abluftöffnungen versehen werden. Der gewünschte Wert der mittleren Luftgeschwindigkeit der Abluft lässt sich schließlich dadurch einstellen, dass zum Abdecken der oder jeder Abluftöffnung ein Geruchsfilter mit entsprechendem Luftwiderstand gewählt wird, indem beispielsweise ein Geruchsfiltermaterial mit entsprechender Porosität und/oder Schichtdicke eingesetzt wird. Auf diese Weise wird nicht nur der erwünschte niedrige Wert der mittleren Luftgeschwindigkeit stromabwärts der Abluftöffnung erzielt, sondern es wird auch der Filterwirkungsgrad verbessert, da die niedrigere mittlere Luftgeschwindigkeit eine entsprechend lange Verweilzeit der mit Geruchsstoffen beladenen Luft in dem Geruchsfilter bewirkt. Bei der Erfindung wird nämlich nicht wie im Stand der Technik nach dem oben erwähnten deutschen Gebrauchsmuster die zu dem Geruchsfilter gelangende Luftmenge verringert, sondern die gesamte Luftmenge wird auf eine insgesamt wesentlich größere Abluftöffnung aufgeteilt, wodurch sich in Kombination mit dem Geruchsfilter die mittlere Luftgeschwindigkeit der Abluft hinter dem Luftfilter in dem gewünschten Maße verringern lässt.

Grundsätzlich wird bei der Wrasenerfassungseinrichtung nach der Erfindung angestrebt, den Geruchsfilter und die Abluftöffnung auch deshalb möglichst groß zu machen, weil sich mit deren zunehmender Größe ein Gebläse mit zunehmend geringerer Leistung verwenden lässt. Der im Vergleich zu dem Vorfilter äußerst großflächige Geruchsfilter bei der Wrasenerfassungseinrichtung nach der Erfindung schafft die Möglichkeit, ein Gebläse geringer Leistung einzusetzen, aber trotzdem große Luftmengen zu bewegen, wofür im Stand der Technik ein teueres großes Hochdruck-Sauggebläse notwendig ist.

Überdies verlangt das Herausfiltern von Geruchsstoffen einen Filter, der wesentlich größer ist als ein Filter zum Herausfiltern von feinen und feinsten Partikeln wie ein Fettfilter. Auch diese Bedingung erfüllt die Wrasenerfassungseinrichtung nach der Erfindung , weil für die Abluftöffnung und somit für den Geruchsfilter eine Größe gewählt wird, die ein Vielfaches der Größe des Vor- oder Fettfilters ist. Der Gegendruck, der zwischen dem Gebläse und dem Geruchsfilter bei der Wrasenerfassungseinrichtung nach der Erfindung aufgebaut wird, ist deshalb um ein Vielfaches geringer als bei dem vorgenannten Stand der Technik, z.B auch dem Dokument US 3 926 171 A. Dort beträgt die Größe des Geruchsfilters schätzungsweise nur etwa die Hälfte von der des Fettfilters. Es lässt sich daher mit der Wrasenerfassungseinrichtung nach der Erfindung mit einem relativ kleinen Gebläse verunreinigte Luft oder Wrasen von dem Entstehungsort sehr wirksam absaugen. Gegenüber dem Stand der Technik nach der EP 1 194 721 B1 erlaubt das sogar, auf den Blasstrahl gänzlich zu verzichten. Gegenüber dem Stand der Technik nach der EP 0 915 299 B1 erlaubt das, am Entstehungsort von Wrasen, beispielsweise an einer in Draufsicht rechteckigen Kochstelle, nur auf einer Längsseite derselben Wrasen abzusaugen.

Der Abluftstrom lässt sich bei der Wrasenerfassungseinrichtung nach der Erfindung auf effiziente Weise so steuern, dass hinter dem Geruchsfilter und somit hinter der Abluftöffnung der Wert der mittleren Luftgeschwindigkeit, höchstens 0,6 m/s beträgt und üblicherweise sogar noch darunter liegt. Diese niedrige mittlere Luftgeschwindigkeit der Abluft macht es möglich, die Abluftöffnung mit dem Geruchsfilter statt horizontal und bodennah an beliebiger Stelle und stattdessen oder zusätzlich vertikal anzuordnen, zum Beispiel in allen vertikalen Seitenflächen der Abluftbox und in einer Entfernung von dem Entstehungsort von verunreinigter Luft oder Wrasen, die in weiten Grenzen wählbar ist. Auch der Höchstwert der mittleren Luftgeschwindigkeit von 0,6 m/s ist nur ein Beispiel und kann je nach Umgebungsbedingungen in einem weiten Bereich variieren.

Wie bei dem eingangs genannten Stand der Technik wird bei der Wrasenerfassungseinrichtung nach der Erfindung die Abluft als Umluft in den Raum geführt. Das ist unter dem Gesichtspunkt der Energiebilanz wesentlich effizienter, als die Abluft ins Freie oder in einen anderen Raum zu leiten, weil in diesem Fall Luft ständig nachgeliefert werden müsste.

Bei der Wrasenerfassungseinrichtung nach der Erfindung muss lediglich die Absaugöffnung etwa auf Höhe des Arbeitsplatzes, an dem verunreinigte Luft oder Wrasen entsteht, positioniert sein. Alle übrigen Teile der Wrasenerfassungseinrichtung, die über das Kanalsystem an die Ansaugöffnung angeschlossen sind, insbesondere die Abluftbox und/oder das zwischen Vor- und Geruchsfilter angeordnete Sauggebläse können weit entfernt von dem Entstehungsort von verunreinigter Luft oder Wrasen an einem frei wählbaren Ort untergebracht werden. Die niedrige mittlere Luftgeschwindigkeit der Abluft stromabwärts des Geruchsfilters, die mit der Wrasenerfassungseinrichtung nach der Erfindung erzielbar ist, und der frei wählbare Ort für die Unterbringung der Abluftbox und/oder des Gebläses gewährleisten, dass die Behaglichkeit von Personen an einem Arbeitsplatz wie z.B. einer Ausgabeanlage oder in einer Küche nicht beeinträchtigt wird, weder durch Zugluft noch durch aufgewirbelten Staub. Das Vorsehen des bei der Wrasenerfassungseinrichtung nach der Erfindung eingesetzten großen Geruchsfilters wird durch die heutige Verfügbarkeit von sehr preisgünstigem Geruchsfiltermaterial kostenmäßig begünstigt.

Vorteilhafte Ausgestaltungen der Erfindung bilden die Gegenstände der abhängigen Ansprüche.

Wenn in einer Ausgestaltung der Wrasenerfassungseinrichtung nach der Erfindung das Gebläse auf seiner stromabwärtigen Seite direkt mit der Abluftbox verbunden ist, wandert bei der Wahl des besten Aufstellungsortes für die Abluftbox das Gebläse mit dieser mit.

Wenn in einer weiteren Ausgestaltung der Wrasenerfassungseinrichtung nach der Erfindung das Kanalsystem einen das Gebläse mit der Abluftbox verbindenden Zuluftkanal aufweist, braucht bei der Wahl des besten Aufstellungsortes der Abluftbox lediglich die Länge des Zuluftkanals entsprechend gewählt zu werden.

Wenn in einer weiteren Ausgestaltung der Wrasenerfassungseinrichtung nach der Erfindung das Gebläse mit der Abluftbox kombiniert ist, braucht lediglich die mit dem Geruchsfilter versehene Abluftbox an geeigneter Stelle in einem Raum untergebracht und für eine geeignete Länge des Zuluftkanals gesorgt zu werden. Das Gebläse kann dabei in einer an die Abluftbox angebauten oder von der Abluftbox abgeteilten Gebläsekammer untergebracht sein.

Wenn in einer weiteren Ausgestaltung der Wrasenerfassungseinrichtung nach der Erfindung die oder jede Abluftöffnung mit einem Gitter als Widerlager für den Geruchsfilter versehen ist, kann ein entsprechender Geruchsfilter einfach auf dieses Gitter aufgelegt werden. Bei horizontaler Anordnung desselben liegt der Geruchsfilter einfach durch Schwerkraft auf dem Gitter auf. Zusätzlich wird jeder Geruchsfilter durch den durch ihn hindurchgehenden Abluftstrom in seiner Lage gehalten.

Wenn in einer weiteren Ausgestaltung der Wrasenerfassungseinrichtung nach der Erfindung der oder jeder Geruchsfilter aus einer flexiblen Matte besteht, die auf die Abluftöffnung auflegbar oder aufgelegt ist, eignet er sich insbesondere zur Verwendung bei der vorstehend genannten Ausführungsform, die ein Gitter als Widerlager für den Geruchsfilter aufweist.

Wenn in einer weiteren Ausgestaltung der Wrasenerfassungseinrichtung nach der Erfindung der oder jeder Geruchsfilter aus offenzelligem Schaumstoff besteht, der mit Aktivkohle beschichtet ist, dürfte es sich um die zur Zeit denkbar preiswerteste Ausführungsform eines solchen Geruchsfilters handeln, der schätzungsweise nur ein-bis zweimal im Jahr auszuwechseln und zu entsorgen ist und somit vernachlässigbare Kosten verursacht. Bevorzugt wird bei der Erfindung als ein solcher Geruchsfilter der PORET®-Carbon-Filter eingesetzt, der von der Emmerling & Weyl GmbH & Co. Schaumstoff-KG, D-65582 Diez, erhältlich ist. Bei dem PORET®-Carbon-System handelt es sich um einen mit Pulverkohle hochbeladenen Skelettschaum, den es in verschiedenen Schichtdicken gibt und der eine gesteuerte Porosität von 10 - 80 PPI (Pores Per Inch oder 4 - 30 Poren pro Zentimeter) sowie eine wählbare Dichte von 21 - 30 kg/m3 hat. Weitere technische Daten dieses Filtermaterials sind dem EMW-Datenblatt 05/01, PORET Filterschaum, entnehmbar.

Wenn in einer weiteren Ausgestaltung der Wrasenerfassungseinrichtung nach der Erfindung der oder jeder Geruchsfilter aus einer Kassette besteht, die Filtermaterial enthält, so sind vorzugsweise die gegenüberliegenden beiden großen Flächen der Kassette vergittert. Zwischen den Gittern kann ein Bett aus Zeolith in Granulatform oder aus Formkohle oder aus einem plissierten Kohlegewebe nach dem Datenblatt "Aktiv gegen Gase und Gerüche: Viledon CarboPleat und DuoPleat Filter" der Firma Freudenberg Vliesstoffe KG, D-69465 Weilheim, aus 6/98, oder aber auch eine Filterschaummatte der vorgenannten Art angeordnet werden. Da die Kassette vergittert ist, brauchte die Abluftöffnung nicht mit einem Gitter als Widerlager versehen zu sein.

Wenn in einer weiteren Ausgestaltung der Wrasenerfassungseinrichtung nach der Erfindung die Abluftbox mit einer Klappe versehen ist, die sich zum Einlegen und Herausnehmen des Geruchsfilters öffnen lässt, lässt sich der Geruchsfilter auf einfache Weise auswechseln oder zu Wartungszwecken herausnehmen.

Wenn in einer weiteren Ausgestaltung der Wrasenerfassungseinrichtung nach der Erfindung die Abluftbox quaderförmig ausgebildet ist, kann die Abluftbox an geeigneter Stelle entfernt von dem mit der Absaugöffnung versehenen Teil des Kanalsystems angeordnet werden, in der Küche vorzugsweise in oder neben einem Unterschrank oder auf oder neben einem Hängeschrank und in einer Ausgabeanlage in einer Ausgabetheke oder auf einem Wagen mit thermischen Geräten, an denen Wrasen entsteht.

Wenn in einer weiteren Ausgestaltung der Wrasenerfassungseinrichtung nach der Erfindung die Abluftbox zylinderförmig ist, kann die Abluftbox an passender Stelle in einem Raum aufgestellt werden, wobei wiederum lediglich für eine geeignete Verbindung mit dem die Absaugöffnung aufweisenden Teil des Kanalsystems zu sorgen ist.

Wenn in einer weiteren Ausgestaltung der Wrasenerfassungseinrichtung nach der Erfindung das Kanalsystem im Bereich der Absaugöffnung als eine Hutze ausgebildet ist, lässt sich an einem Arbeitsplatz verunreinigte Luft oder Wrasen gezielt absaugen. An einem Küchenarbeitsplatz wird die Hutze dabei neben den thermischen Geräten positioniert, an denen Wrasen entsteht, und die Absaugöffnung ist in der Hutze auf Höhe der thermischen Geräte vorgesehen, reicht also beispielsweise bis zu der Oberfläche eines als thermisches Gerät eingesetzten Kochfeldes.

Wenn in einer weiteren Ausgestaltung der Wrasenerfassungseinrichtung nach der Erfindung die Hutze ein gesondert ausgebildeter Modul ist, kann der übrige Teil der Wrasenerfassungseinrichtung nach der Erfindung an beliebiger geeigneter Stelle in einem Raum untergebracht werden. Es ist lediglich für einen Zuluftkanal von geeigneter Länge zu sorgen.

Wenn in einer weiteren Ausgestaltung der Wrasenerfassungseinrichtung nach der Erfindung das Gebläse in die Hutze integriert ist, braucht lediglich die mit dem Geruchsfilter versehene Abluftbox an geeigneter Stelle in einem Raum untergebracht und für eine geeignete Luftströmungsverbindung zwischen der Hutze und der Abluftbox gesorgt zu werden.

Wenn in einer weiteren Ausgestaltung der Wrasenerfassungseinrichtung nach der Erfindung der Vorfilter in dem Kanalsystem unmittelbar neben der Absaugöffnung angeordnet ist, lässt es sich durch Wahl eines geeigneten Vorfilters leicht bewerkstelligen, dass das gesamte Kanalsystem im Inneren frei von Partikeln und insbesondere frei von Fett bleibt, was die Reinigung des Kanalsystems erheblich erleichtert und eine Reinigung nur in längeren Zeitabständen erlaubt.

Wenn in einer weiteren Ausgestaltung der Wrasenerfassungseinrichtung nach der Erfindung der Vorfilter in der Hutze angeordnet ist, ergeben sich die gleichen Vorteile wie bei der vorhergehenden Ausführungsform, wobei aber zusätzlich die Gestaltung des an die Hutze anschließenden Zuluftkanals erhebliche Freiheiten gewährt, denn es würde beispielsweise ausreichen, als Zuluftkanal zwischen der Hutze und der Abluftbox lediglich einen oder mehrere Schläuche vorzusehen.

Wenn in einer weiteren Ausgestaltung der Wrasenerfassungseinrichtung nach der Erfindung der Vorfilter in dem Zuluftkanal angeordnet ist, kann die Hutze einfach von dem Kanalsystem getrennt oder die Wrasenerfassungseinrichtung ohne Hutze betrieben werden.

Wenn in einer weiteren Ausgestaltung der Wrasenerfassungseinrichtung nach Erfindung der Zuluftkanal aus wenigstens einem biegsamen Schlauch besteht, können die Abluftbox und der übrige Teil des Kanalsystems der Wrasenerfassungseinrichtung an geeigneten Stellen in einem Raum entfernt voneinander untergebracht und trotzdem auf einfache Weise mit der Absaugöffnung verbunden werden.

Wenn in weiteren Ausgestaltungen der Wrasenerfassungseinrichtung nach der Erfindung der Vorfilter ein Fettfilter und insbesondere ein Wirbelstromfilter ist, beispielsweise ein Zyklon-Filter, wie er von der Firma Rentschier & Reven hergestellt wird, lassen sich 99,5 % von in der Luft mitgeführtem Fett abscheiden. Neben Fetttröpfchen werden auch Wassertröpfchen ausgeschieden, was für die Leistungsfähigkeit des Geruchsfilters hilfreich ist, wenn es sich bei diesem um einen Aktivkohlefilter handelt. Ein Zyklon-Filter lässt sich leicht in einer Geschirrspülmaschine oder in einem Tauchbad reinigen.

Wenn in einer weiteren Ausgestaltung der Wrasenerfassungseinrichtung nach der Erfindung der Vorfilter ein Grobpartikelfilter ist oder einen Grobpartikelfilter aufweist, werden grobe Verunreinigungen der Luft wie Haare, Flusen od. dgl. aus dem Kanalsystem ferngehalten. Diese Ausgestaltung ist in Fällen von Bedeutung, wo die Wrasenerfassungseinrichtung hauptsächlich mit Gerüchen und nicht mit Fett beladene Luft zu erfassen hat.

Wenn in einer weiteren Ausgestaltung der Wrasenerfassungseinrichtung nach der Erfindung der Vorfilter ein Filter aus Vliesstoff ist, ist ein Grobpartikelfilter auf einfache Weise realisiert.

Wenn in einer weiteren Ausgestaltung der Wrasenerfassungseinrichtung nach der Erfindung der Zuluftkanal und die Abluftbox oberhalb der Hutze angeordnet sind, so ist das eine Anordnung, die in Fällen geeignet ist, wo keine Unterbaumöglichkeit besteht. Statt bodennah wie im Stand der Technik lässt sich in diesem Fall die Abluftöffnung mit dem Geruchsfilter oberhalb des Wrasenentstehungsortes in einer Küche oder Ausgabeanlage anordnen, ohne dass die Behaglichkeit durch die Abluft beeinträchtigt wird. Die geringe Abluftgeschwindigkeit stromabwärts des Geruchsfilters bei der Wrasenerfassungseinrichtung nach der Erfindung macht das möglich. Auch in diesem Fall ist die Absaugöffnung neben dem Wrasenentstehungsort positioniert, wie in dem eingangs geschilderten Stand der Technik, also in einer Küche oder Ausgabeanlage auf der Höhe des Wrasenentstehungsortes.

Wenn in einer weiteren Ausgestaltung der Wrasenerfassungseinrichtung nach der Erfindung wenigstens eine der stromaufwärtigen Seite der Absaugöffnung zugewandte Seitenfläche der Abluftbox als eine durch den Geruchsfilter abdeckbare oder abgedeckte Abluftöffnung ausgebildet ist, kann die Abluftbox wie eine herkömmliche Luft- oder Dunstabzugshaube oberhalb eines Arbeitsplatzes angebracht werden, dient aber im Unterschied zu der herkömmlichen Luft- oder Dunstabzugshaube zum Abgeben von Abluft, die das Personal an dem Arbeitsplatz nicht stört und über die Absaugöffnung der Wrasenerfassungseinrichtung gleich wieder mit eingesaugt werden kann. So kann verunreinigte Luft mehreren Reinigungsvorgängen hintereinander unterzogen worden, bevor sie schließlich als Umluft in den umgebenden Raum gelangt, und es kann ein Sauggebläse mit noch weniger Leistung eingesetzt werden.

Wenn in einer weiteren Ausgestaltung der Wrasenerfassungseinrichtung nach der Erfindung wenigstens eine der Hutze zugewandte Seitenfläche einer an die stromaufwärtige Seite der Abluftbox angeschlossenen Haube mit einer durch einen Geruchsfilter abgedeckten Abluftöffnung versehen ist, lässt sich eine vor Ort bereits vorhandene Dunstabzugshaube zu einer Abluftbox umrüsten, die an die Abluftbox der Wrasenerfassungseinrichtung nach der Erfindung angeschlossen wird oder statt derselben eingesetzt werden kann.

Ausführungsbeispiele der Erfindung werden im Folgenden unter Bezugnahme auf die beigefügten Figuren 1 bis 11 und 14 bis 18 näher beschrieben. Es zeigt
- Fig. 1: in Rückansicht eine fahrbare Ausgabeanlage mit einer Speisenzubereitungseinrichtung und mit einer ersten Ausführungsform einer Wrasenerfassungseinrichtung nach der Erfindung,
- Fig. 2: die Ausgabeanlage nach Fig. 1 in Seitenansicht,
- Fig. 3: die Ausgabeanlage nach Fig. 1 in Vorderansicht,
- Fig. 4: die Ausgabeanlage nach Fig. 1 in Draufsicht,
- Fig. 5: als eine Einzelheit in ausführlicherer Darstellung einen Teil der Ausgabeanlage nach Fig. 2,
- Fig. 6: eine abgewandelte Ausführungsform einer bei der Wrasenerfassungseinrichtung nach der Erfindung einsetzbaren Abluftbox in Seitenansicht,
- Fig. 7: die Abluftbox nach Fig. 6 in Draufsicht,
- Fig. 8: die Abluftbox nach Fig. 6 in Vorderansicht,
- Fig. 9: in Seitenansicht und teilweise im Schnitt eine stationäre Ausgabeanlage mit einer Speisenzubereitungseinrichtung und mit einer zweiten Ausführungsform der Wrasenerfassungseinrichtung nach der Erfindung,
- Fig. 10: in Seitenansicht und teilweise im Schnitt eine stationäre Ausgabeanlage mit einer Speisenzubereitungseinrichtung mit einer dritten Ausführungsform der Wrasenerfassungseinrichtung nach der Erfindung,
- Fig. 11: in perspektivischer Darstellung eine vierte Ausführungsform der Wrasenerfassungseinrichtung nach der Erfindung, die zum Einsatz in einer Küche oder einer Ausgabeanlage geeignet ist,
- Fig. 12: als eine Einzelheit einer fünften Ausführungsform einer nicht erfindungsgemäßen Wrasenerfassungseinrichtung eine zylinderförmige Abluftbox derselben in Seitenansicht,
- Fig. 13: die Abluftbox nach Fig. 12 in einer Teillängsschnittansicht,
- Fig. 14: in Seitenansicht und teilweise im Schnitt eine fahrbare Ausgabeanlage mit einer Speisenzubereitungseinrichtung und mit einer sechsten Ausführungsform der Wrasenerfassungseinrichtung nach der Erfindung,
- Fig. 15: in Vorderansicht eine Küchenzeile mit einer Speisenzubereitungseinrichtung und einer siebten Ausführungsform der Wrasenerfassungseinrichtung nach der Erfindung,
- Fig. 16: in Seitenansicht die Küchenzeile nach Fig. 15,
- Fig. 17: in Seitenansicht einen Arbeitstisch mit einer achten Ausführungsform der Wrasenerfassungseinrichtung nach der Erfindung und
- Fig. 18: die Wrasenerfassungseinrichtung nach Fig. 17 in Vorderansicht.

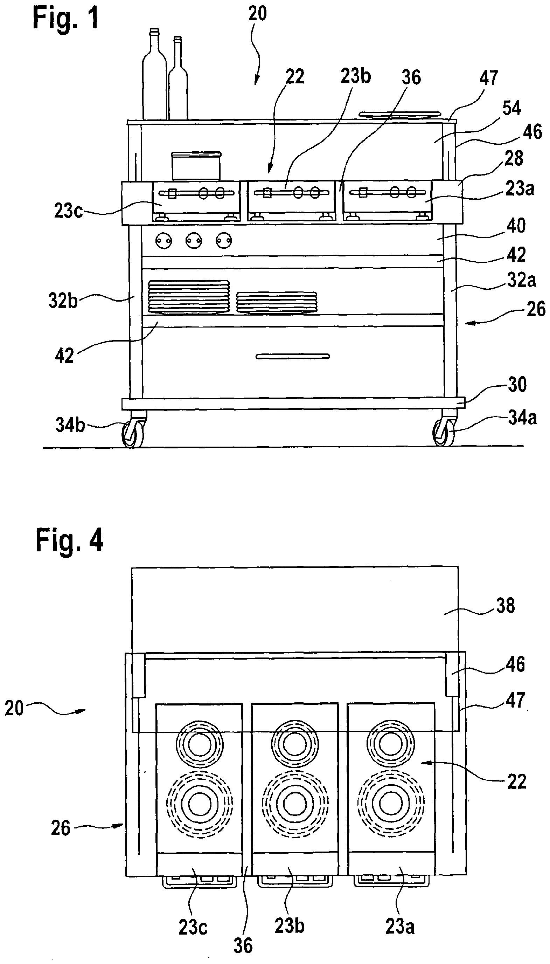

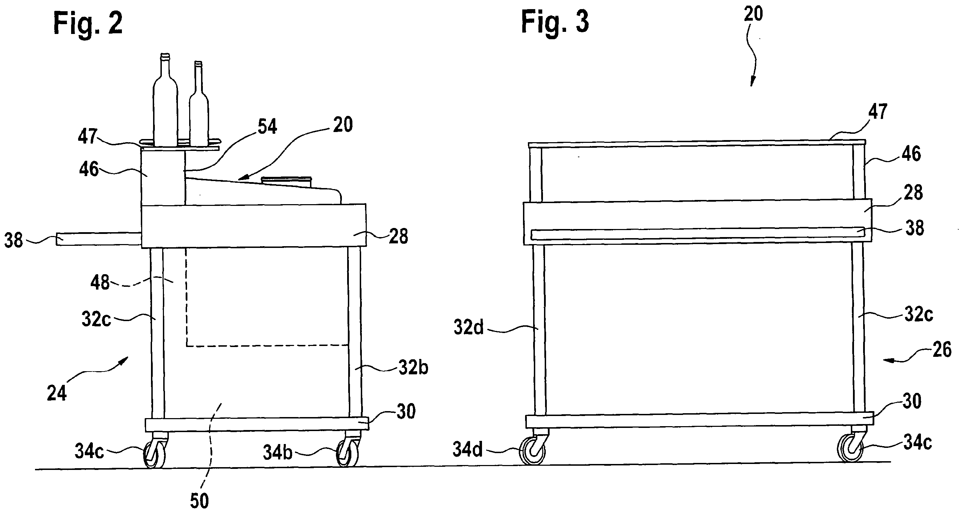

Die Fig. 1 - 4 zeigen eine insgesamt mit 20 bezeichnete fahrbare Ausgabeanlage mit einer insgesamt mit 22 bezeichneten Speisenzubereitungseinrichtung und mit einer ersten Ausführungsform einer insgesamt mit 24 bezeichneten Wrasenerfassungseinrichtung nach der Erfindung in Rückansicht, Seitenansicht, Vorderansicht bzw. Draufsicht. Die fahrbare Ausgabeanlage 20 ist auf einem Wagen 26 untergebracht, der einen oberen Rahmen 28 und einen unteren Rahmen 30 aufweist, die durch vier vertikale Pfosten 32a - 32d miteinander verbunden und durch vier Lenkrollen 34a - 34d auf dem Boden abgestützt sind. In dem oberen Rahmen 28 ist eine Nische 36 gebildet, die auf der Rückseite des Wagens 26, welche in Fig. 1 gezeigt ist, offen ist. Die Speisenzubereitungseinrichtung 22 ist in der Nische 36 angeordnet und besteht aus drei nebeneinander angeordneten thermischen Geräten 23a - 23c zum Warmhalten und/oder Zubereiten von Speisen. Gemäß der Darstellung in den Fig. 2 - 4 hat die Ausgabeanlage 20 auf ihrer Vorder- oder Kundenseite eine Tablettrutsche 38, die an dem oberen Rahmen 28 befestigt ist. Der untere Rahmen 30 ist in dem gezeigten Ausführungsbeispiel ein aus Vierkantrohr geschweißter rechteckiger Rahmen. Unterhalb der offenen Seite der Nische 36 erstreckt sich eine zwischen den Pfosten 32a und 32b befestigte Steckdosenleiste 40 mit drei in Fig. 1 angedeuteten Steckdosen für den elektrischen Anschluss der drei thermischen Geräte 23a, 23b und 23c. Ein Zwischenboden 42 dient zum Abstellen von Geschirr od. dgl.

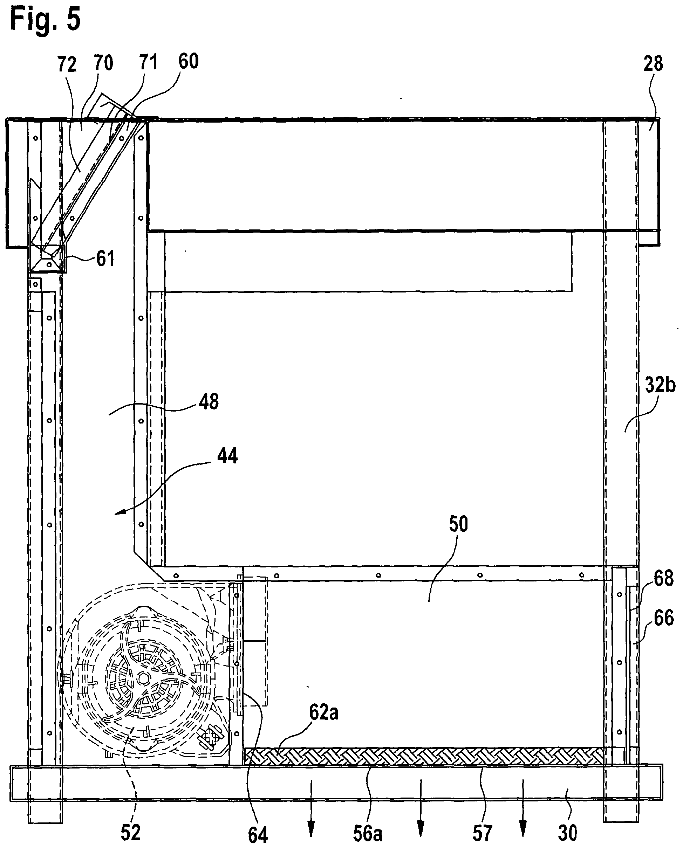

Die Wrasenerfassungseinrichtung 24 umfasst ein Kanalsystem 44, bestehend aus einer Hutze 46, einem Zuluftkanal 48 und einer Abluftbox 50, die gegenseitig in Luftströmungsverbindung stehen. In dem Kanalsystem ist ein Gebläse 52 angeordnet, und zwar zum Beispiel so, wie es in Fig. 5 gezeigt ist, auf die nun zusätzlich Bezug genommen wird.

Fig. 5 zeigt als eine Einzelheit in ausführlicherer Darstellung einen Teil der Ausgabeanlage 20 nach Fig. 2. Die Hutze 46, der Zwischenboden 42 und die Lenkrollen 34a -34d sind in Fig. 5 zur Vereinfachung der Darstellung des Kanalsystems 44 weggelassen worden. Das Kanalsystem 44 führt von einer in der Hutze 46 vorgesehenen Absaugöffnung 54 oder von einer die Absaugöffnung bildenden Lufteintrittsöffnung 70 zu wenigstens einer in der Abluftbox 50 vorgesehenen Abluftöffnung 56a. Die Absaugöffnung 54 bzw. die Lufteintrittsöffnung 70 ist auf der Höhe der thermischen Geräte 23a -23c positioniert, also dort, wo bei dem Warmhalten oder Erhitzen von Speisen od. dgl. Wrasen entsteht. Bei der Wrasenerfassungseinrichtung 24 nach den Fig. 1 bis 5 ist das Gebläse 52 in dem Zuluftkanal 48 an dem stromabwärtigen Ende desselben angeordnet. Das Gebläse 52 ist auf seiner stromabwärtigen Seite direkt mit der Abluftbox 50 verbunden. Das Gebläse 52 ist bei dieser Ausführungsform und bei den weiter unten beschriebenen weiteren Ausführungsformen der Wrasenerfassungseinrichtung 24 nach der Erfindung bevorzugt ein doppelseitig saugendes AC Radialgebläse der Firma ebm-papst Mulfingen GmbH & Co. KG, D-74673 Mulfingen, beispielshalber des Typs D2E 146-HT760-01. Weitere Einzelheiten zu diesem Gebläse finden sich auf den Seiten 84 und 85 des Katalogs "ebmpapst Radialgebläse und - Ventilatoren, Axialventilatoren" aus dem Jahre 2004. Das Gebläse 52 hat die Aufgabe, mit Wrasen beladene Luft an dem Entstehungsort über der Speisenzubereitungseinrichtung 22 abzusaugen und zu der Abluftöffnung 56a zu fördern, damit die Luft auf ihrem Weg durch eine Filtereinrichtung gereinigt wird.

Die Filtereinrichtung ist in dem Kanalsystem 44 angeordnet und weist wenigstens einen Fettfilter 60 als einen Vorfilter und wenigstens einen Geruchsfilter 62a als einen Hauptfilter auf. In Fig. 5 ist das Kanalsystem 44 ab dem Gebläse 52 als die bereits erwähnte Abluftbox 50 ausgebildet, die in diesem Ausführungsbeispiel quaderförmig ist, also sechs Seitenflächen hat. Jede Seitenfläche kann als eine Abluftöffnung ausgebildet sein, wobei sich jede Abluftöffnung möglichst groß so wählen lässt, wie es der Festigkeitsverband der quaderförmigen Abluftbox 50 zulässt. In Fig. 5 ist diejenige Seitenfläche der Abluftbox 50, an die das Gebläse 52 angeschlossen ist, lediglich mit einer Lufteinströmöffnung 64, also mit keiner Abluftöffnung versehen. In einer Klappe 66, die eine von der Rückseite der Ausgabeanlage 20 her zugängliche Zugangsöffnung 68 der Abluftbox 50 verschließt, ist eine Abluftöffnung 56d ausgebildet.

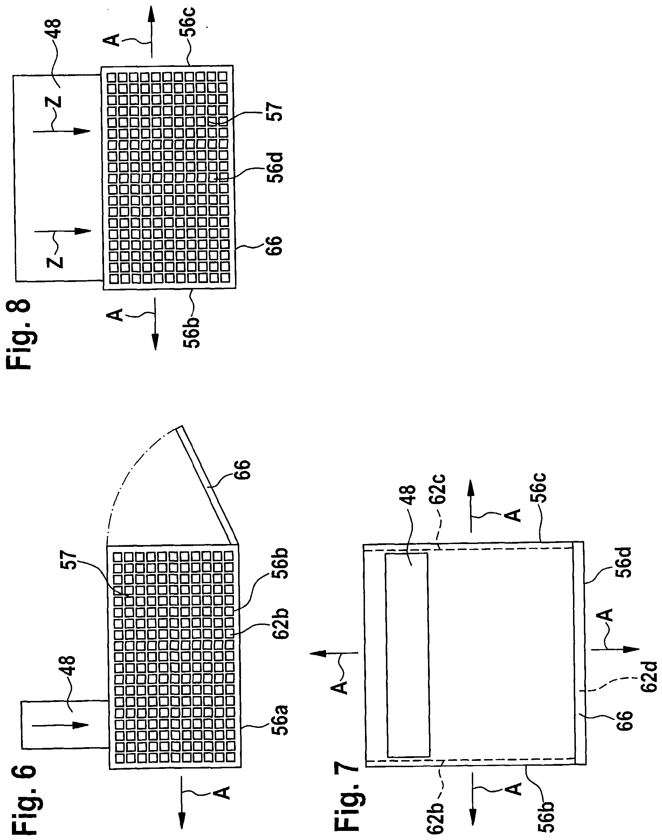

In den Fig. 6 bis 8, auf die im Folgenden noch näher Bezug genommen wird, ist eine abgewandelte Ausführungsform einer bei der Wrasenerfassungseinrichtung 24 nach der Erfindung einsetzbaren Abluftbox 50 in Seitenansicht, Draufsicht bzw. Vorderansicht gezeigt. Diese Figuren zeigen auch, dass die beiden vertikalen Seitenwände der Abluftbox 50 als Abluftöffnungen 56b, 56c ausgebildet sind. Jede der Abluftöffnungen 56a - 56d ist durch einen Geruchsfilter 62a - 62d abgedeckt. Die gesamte Größe der Abluftöffnungen 56a - 56d und der Geruchsfilter 62a - 62d wird in Kombination mit dem Luftwiderstand der Geruchsfilter, der durch deren Porosität und/oder Dicke bestimmt wird, so gewählt, dass sich bei einem vorgegebenen Volumenstrom der Abluft A, welcher durch das Gebläse 52 erzeugt wird, stromabwärts der Abluftöffnungen und der Geruchsfilter ein Wert der mittleren Luftgeschwindigkeit ergibt, durch den die Behaglichkeit in dem die Ausgabeanlage 20 umgebenden Raum und der Filterwirkungsgrad nicht beeinträchtigt werden, wie es eingangs erläutert worden ist.

Als Geruchsfilter 62a - 62d werden vorzugsweise flexible, mit Aktivkohlepulver beschichtete Schaumstoffmatten eingesetzt, die auf die Abluftöffnungen 56a - 56d aufgelegt werden. Für diesen Fall ist jede Abluftöffnung mit einem Gitter 57 als Widerlager für den Geruchsfilter versehen. Stattdessen kann jeder Geruchsfilter aus einer Kassette bestehen, welche das Filtermaterial enthält und auf ihrer Vorder- und Rückseite jeweils mit einem Gitter 57 versehen ist. In diesem Fall hat jede Kassette den gleichen Aufbau wie die Klappe 66 nach den Fig. 6 und 8.

Bei der Wrasenerfassungseinrichtung nach den Fig. 1 - 4 ist das Kanalsystem 44 im Bereich der Absaugöffnung 54 als die Hutze 46 ausgebildet. Die Hutze 54 ist ein gesondert ausgebildeter Modul, der über der Lufteintrittsöffnung 70 des Zuluftkanals 48 auf den oberen Rahmen 28 so aufgesetzt wird, wie es in den Fig. 1 - 4 dargestellt ist. Die Oberseite der Hutze 46 ist bei dem dargestellten Ausführungsbeispiel als eine Abstellplatte 47 ausgebildet. Der Fettfilter 60 ist in dem Kanalsystem 44 unmittelbar neben der Absaugöffnung 54 in dem stromaufwärtigen Ende des Zuluftkanals 48 unmittelbar benachbart zu der Lufteintrittsöffnung 70 angeordnet. Unterhalb des Fettfilters 60 ist eine Fettauffangschale 61 angeordnet. Dem Fettfilter 60 sind in dem hier beschriebenen Ausführungsbeispiel entweder ein Filter aus Vliesstoff oder Metallgestrick oder, wie es in Fig. 5 angedeutet ist, ein Agglomerator 71 und ein weiterer Fettfilter 72 nachgeschaltet. Wenn dem Fettfilter 60 wie hier der Agglomerator 71 und der weitere Fettfilter 72 nachgeschaltet sind, lässt sich Feuchtigkeit praktisch 100 %-ig aus der mit Wrasen beladenen Luft abscheiden, bevor diese stromabwärts der Fettfilter 60, 72 in das Kanalsystem 44 gelangt. Ein als Fettfilter 60 eingesetzter Zyklon-Filter ist beispielsweise in der Lage, Partikel abzuscheiden, die eine Größe von 5 µm oder mehr haben. Feinste Wassertröpfchen können eine Größe unter 5 µm haben. Diese werden durch den Agglomerator 71, ein Metallgestrick, in größere Tröpfchen verwandelt und dann durch den weiteren Fettfilter 72 ausgeschieden.

Bei dem in den Fig. 6 - 8 dargestellten Ausführungsbeispiel der Abluftbox 50 mündet der Zuluftkanal 48 direkt in der oberen Seitenfläche der Abluftbox. Bei diesem Ausführungsbeispiel ist das nicht dargestellte Gebläse in dem nicht sichtbaren, weiter stromaufwärtigen Teil des Kanalsystems 44 angeordnet, zum Beispiel in der hier ebenfalls nicht dargestellten Hutze 46.

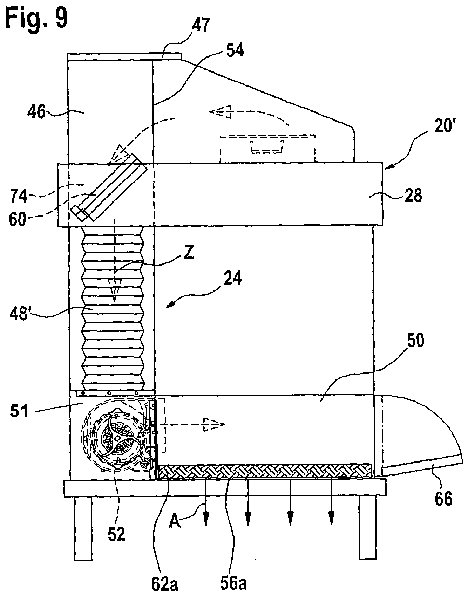

Fig. 9 zeigt in Seitenansicht und teilweise im Schnitt eine stationäre Ausgabeanlage 20' mit einer Speisenzubereitungseinrichtung 22 und mit einer zweiten Ausführungsform der Wrasenerfassungseinrichtung 24 nach der Erfindung. Wie bei der ersten Ausführungsform ist das Gebläse 52 auf seiner stromabwärtigen Seite direkt mit der Abluftbox 50 verbunden, die hier den gleichen Aufbau haben kann wie bei der ersten Ausführungsform, also wie in der Darstellung in Fig. 5. Unterschiedlich gegenüber der ersten Ausführungsform ist, dass ein Zuluftkanal 48' vorgesehen ist, der aus einem biegsamen Schlauch besteht und an eine das Gebläse 52 enthaltende Gebläsekammer 51 angeschlossen ist, und dass der Fettfilter 60 in einer Ausnehmung 74 in dem oberen Rahmen 28 unmittelbar unterhalb der Hutze 46 angeordnet ist.

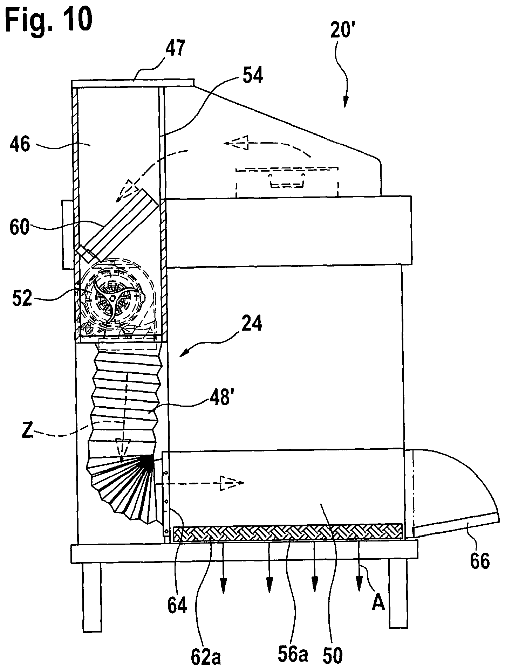

Fig. 10 zeigt in Seitenansicht und teilweise im Schnitt eine stationäre Ausgabeanlage 20' mit einer Speisenzubereitungseinrichtung 22 mit einer dritten Ausführungsform der Wrasenerfassungseinrichtung 24 nach der Erfindung, die sich von der zweiten Ausführungsform nach Fig. 9 dadurch unterscheidet, dass der Fettfilter 60 und unmittelbar stromabwärts desselben das Gebläse 52 in der Hutze 46 angeordnet sind, und zwar in einem Bereich derselben, welcher sich unterhalb der Absaugöffnung 54 befindet. Die Hutze 46 ist durch einen Abluftkanal 48', der aus einem biegsamen Schlauch besteht, mit der Lufteinströmöffnung 64 der Abluftbox 50 verbunden.

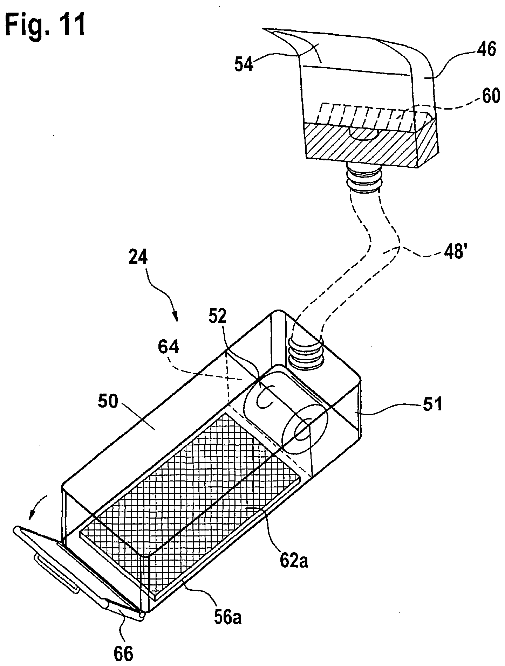

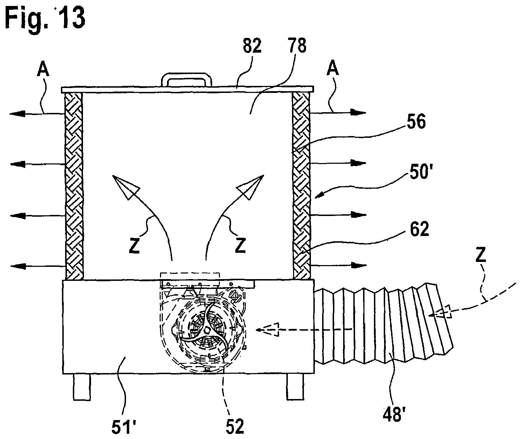

Fig. 11 ist eine perspektivische schematische Darstellung einer vierten Ausführungsform der Wrasenerfassungseinrichtung 24 nach der Erfindung, die zum Einsatz in einer Küche oder einer Ausgabeanlage geeignet ist. Der Fettfilter 60 ist in die Hutze 46 integriert. Das Gebläse 52, das mit der Abluftbox 50 kombiniert ist, ist in einer an die Abluftbox 50 angebauten oder von der Abluftbox 50 abgeteilten Gebläsekammer 51 untergebracht. Die Hutze 46 und die Gebläsekammer 51 sind durch einen Zuluftkanal 48' verbunden, der als ein biegsamer Schlauch ausgebildet ist. Es ist zwar lediglich eine Seitenfläche der Abluftbox 50, nämlich die Boden- oder untere Fläche versehen mit einer Abluftöffnung 56a und einem Geruchsfilter 62a dargestellt, es können jedoch auch die vertikalen Seitenflächen der Abluftbox und die Klappe 66 jeweils mit einer Abluftöffnung und einem Geruchsfilter ausgestattet sein, ausgenommen die Seitenfläche, die die Lufteinströmöffnung 64 aufweist. In der sehr vereinfachten Darstellung in Fig. 11 ist der Luftaustrittskanal auf der stromabwärtigen Seite des Gebläses 52, der an die Lufteinströmöffnung 64 angeschlossen ist, nicht gezeigt. Der Luftaustrittskanal auf der stromabwärtigen Seite des Gebläses 52 ist in den Fig. 9 und 13 gestrichelt angedeutet. Die beiden axialen Stirnseiten des Gebläses 52 bilden dessen Lufteintrittsöffnungen.

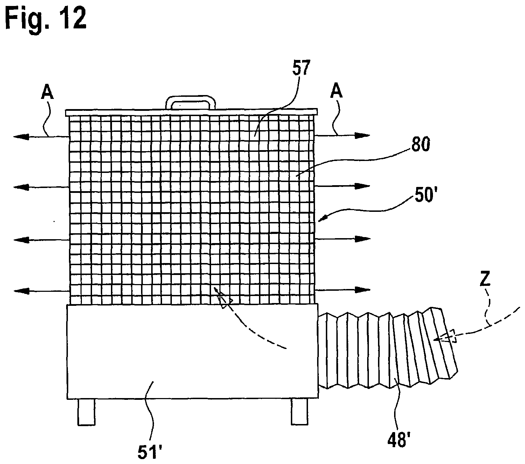

Die Fig. 12 und 13 zeigen als eine Einzelheit einer fünften Ausführungsform der Wrasenerfassungseinrichtung 24 eine zylinderförmige Abluftbox 50' derselben in Seitenansicht bzw. in einer Teillängsschnittansicht. In einer unteren Kammer oder Gebläsekammer 51' der Abluftbox 50' ist das Gebläse 52 angeordnet. Die Abluftbox 50' ist über das Gebläse 52 in der Gebläsekammer 51' und einen Zuluftkanal 48', der als ein biegsamer Schlauch ausgebildet und an die Gebläsekammer 51' angeschlossen ist, mit dem übrigen, in den Fig. 12 und 13 nicht gezeigten Kanalsystem verbunden. Eine obere Kammer 78 ist auf ihrer gesamten Mantelfläche als eine vergitterte Abluftöffnung 80 ausgebildet, die auf der Innenseite des Gitters 57 mit einem Geruchsfilter 62 abgedeckt ist. Die obere Kammer 78 ist durch einen abnehmbaren Deckel oder eine Klappe 82 verschlossen, der bzw. die in der Schließstellung verriegelbar ist.

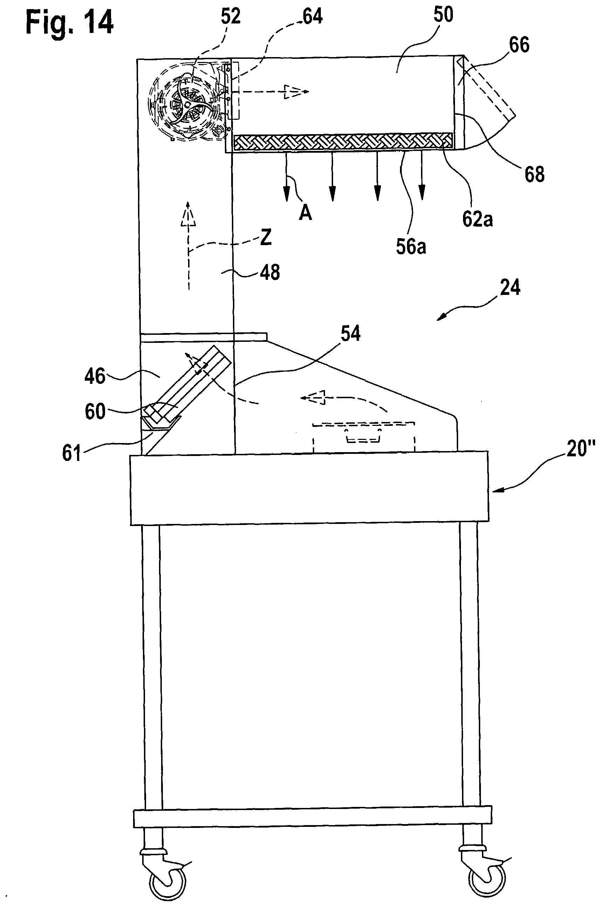

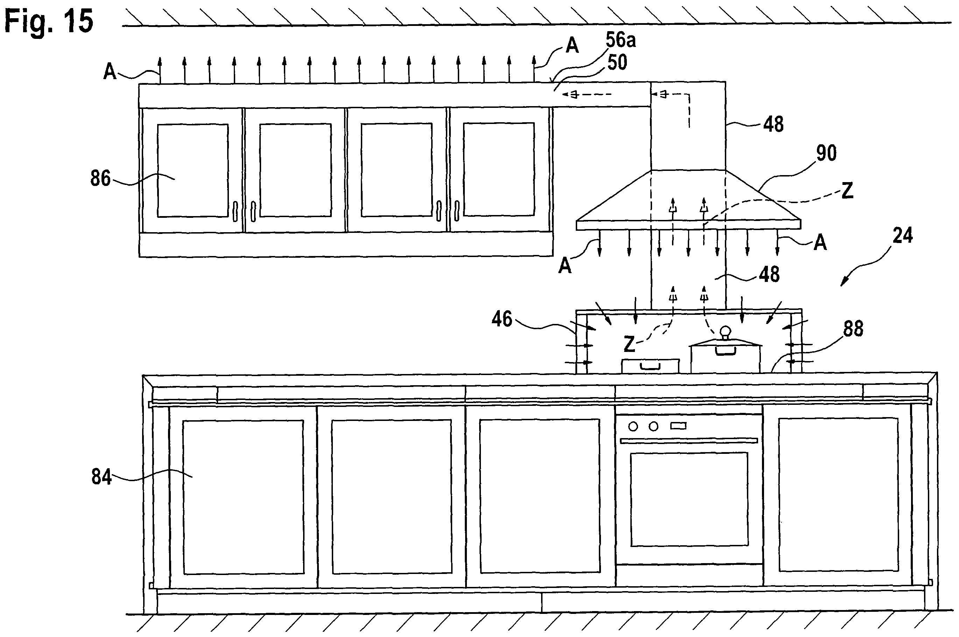

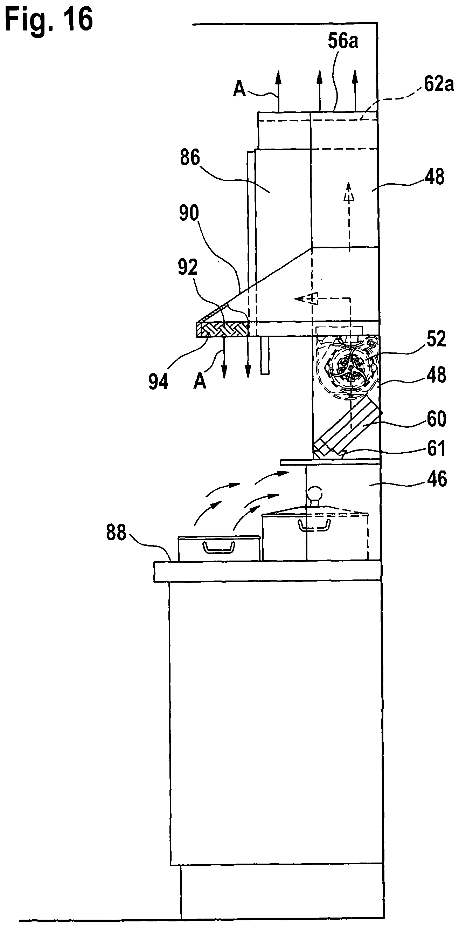

Fig. 14 zeigt in Seitenansicht und teilweise im Schnitt eine insgesamt mit 20" bezeichnete fahrbare Ausgabeanlage mit einer (in Fig. 14 nicht sichtbaren) Speisenzubereitungseinrichtung und mit einer sechsten Ausführungsform der Wrasenerfassungseinrichtung 24 nach der Erfindung. Ein Zuluftkanal 48, der hier aus zwei um die Wagenlänge beabstandeten, zu der oberhalb der Hutze 46 angeordneten Abluftbox 50 führenden Zweigen bestehen kann, enthält das direkt an die Abluftbox 50 angeschlossene Gebläse 52. Die Abluftbox 50 und das Gebläse 52 haben im Übrigen den gleichen Aufbau wie bei der in Fig. 9 dargestellten zweiten Ausführungsform der Wrasenerfassungseinrichtung 24. Bei der Ausführungsform nach Fig. 14 sind der Fettfilter 60 und die Fettauffangschale 61 in der Hutze 46 angeordnet. In der Darstellung in Fig. 14 ist die nach unten gewandte, also der stromaufwärtigen Seite der Absaugöffnung 54 zugewandte Seitenfläche der Abluftbox 50 als eine durch den Geruchsfilter 62a abgedeckte Abluftöffnung 56a dargestellt. Wie bei der Abluftbox 50 nach den Fig. 5 - 8 können aber auch die vertikalen Seitenflächen und die obere Seitenfläche der quaderförmigen Abluftbox 50 nach Fig. 14 jeweils als Abluftöffnung ausgebildet sein, die durch einen Geruchsfilter abgedeckt ist. Ebenso kann die Klappe 66 wie in Fig. 8 mit einem Geruchsfilter versehen sein. Wie bei der ersten Ausführungsform der Wrasenerfassungseinrichtung 24 wird die Größe der Abluftöffnungen so gewählt, dass sich in Kombination mit den eingesetzten Geruchsfiltern der gewünschte niedrige Höchstwert der mittleren Luftgeschwindigkeit der Abluft A ergibt. Im Betrieb saugt das Gebläse 52 mit Wrasen beladene Luft am Wrasenentstehungsort über die Absaugöffnung 54 in die Hutze 46 an, die mit dem über ihr angeordneten Zuluftkanal 48 in Strömungsverbindung steht. In dem Fettfilter 60 wird die abgesaugte Luft von Partikeln wie Fett- und Wassertröpfchen befreit und strömt als Zuluft Z zu dem Gebläse 52, von wo aus die Zuluft in die Abluftbox 50 gefördert und als Abluft A über den oder die Geruchsfilter abgegeben wird. Die den Geruchsfilter 56a in Richtung der Speisenzubereitungseinrichtung verlassende Abluft A wird direkt wieder in die Hutze 46 eingesaugt, um als Zuluft Z das Kanalsystem erneut zu durchströmen und so erneut gereinigt zu werden. Diese Ausführungsform eignet sich nicht nur zum Einsatz auf einem Wagen, wie es in Fig. 14 angedeutet ist, sondern auch als Aufsatz auf einem Küchengerät, das bei der Speisenzubereitung eingesetzt wird. Die Abluftbox 50 nimmt in diesem Fall die Stelle ein, an der sich sonst üblicherweise eine Dunstabzugshaube befindet, liefert aber im Gegensatz zu dieser die Abluft A, die den Vorgang der Wrasenabsaugung von dem Wrasenentstehungsort in Höhe der Speisenzubereitungseinrichtung unterstützt. Eine solche Wrasenerfassungseinrichtung kann aber auch in Kombination mit einer vorhandenen Dunstabzugshaube eingesetzt werden, wobei letztere zu einer Ablufthaube umfunktioniert wird. Einen solchen Fall zeigen die im Folgenden erläuterten Fig. 15 und 16.

Die Fig. 15 und 16 zeigen in Vorderansicht bzw. Seitenansicht eine Küchenzeile mit einer Speisenzubereitungseinrichtung und einer siebenten Ausführungsform der Wrasenerfassungseinrichtung 24 nach der Erfindung. Die Küchenzeile besteht aus einer Reihe von Unterschränken 84 und aus einer Reihe von Hängeschränken 86. An einem Ende der Zeile der Unterschränke 84 befindet sich als Speisenzubereitungseinrichtung ein Kochfeld 88, bei dessen Einsatz Wrasen entsteht. Die Hutze 46 ist wie dargestellt um das Kochfeld 88 aufgesetzt und durch den Zuluftkanal 48, in welchem der Fettfilter 60 und das Gebläse 52 gemäß der Darstellung in Fig. 16 angeordnet sind, an eine Haube 90 angeschlossen. Der Zuluftkanal 48 ist nach oben über die Haube 90 hinaus verlängert und an eine langgestreckte Abluftbox 50 angeschlossen, die über ihre nach oben gerichtete und durch einen Geruchsfilter 62a abgedeckte Abluftöffnung 56a die Abluft A nach oben abgibt. Die der Hutze 46 zugewandte untere Seitenfläche der an die stromaufwärtige Seite der Abluftbox 50 angeschlossenen Haube 90 ist mit einer durch einen Geruchsfilter 94 abgedeckten Abluftöffnung 92 versehen, über die die Abluft A nach unten in Richtung zu dem Kochfeld 88 abgegeben wird. Wie bei der in Fig. 14 dargestellten sechsten Ausführungsform der Wrasenerfassungseinrichtung 24 wird so der Wrasenabsaugvorgang vorteilhaft unterstützt, ohne dass die Behaglichkeit in dem umgebenden Raum oder der Filterwirkungsgrad beeinträchtigt wird. Diese Ausführungsform ermöglicht nicht nur auf einfache Weise das Auswählen von großflächigen Abluftöffnungen und in Kombination mit entsprechenden Geruchsfiltern das Erzielen der erwünschten niedrigen mittleren Luftgeschwindigkeit der Abluft A, sondern sogar eine Verbesserung des Wirkungsgrades der Wrasenerfassungseinrichtung und der Filtereinheit.

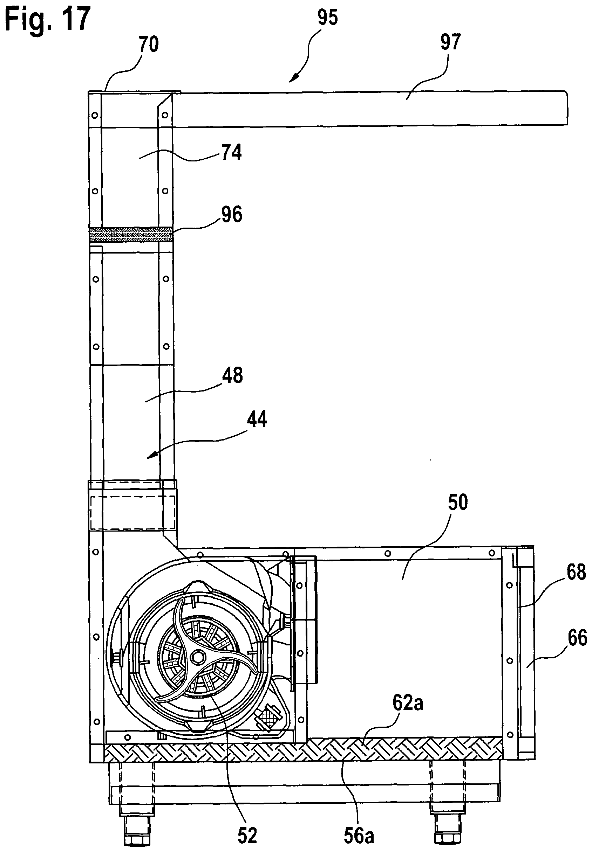

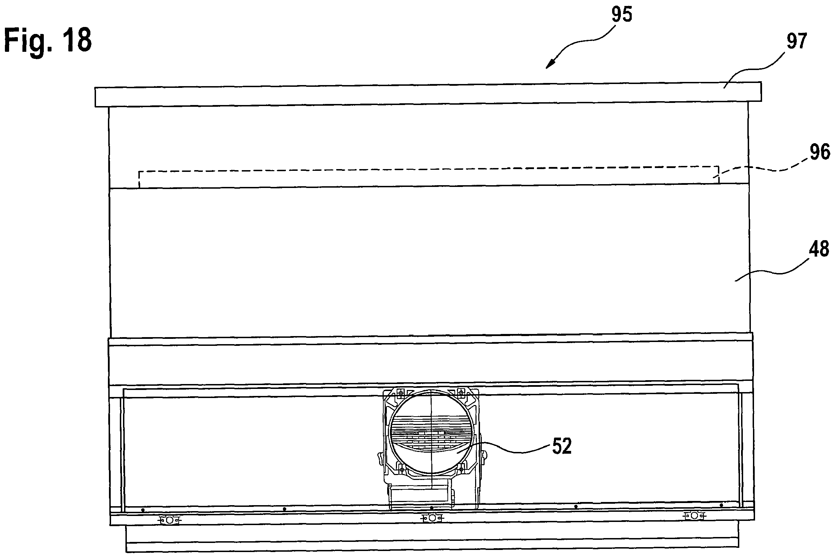

Fig. 17 zeigt in Seitenansicht einen insgesamt mit 95 bezeichneten Arbeitstisch mit einer achten Ausführungsform der Wrasenerfassungseinrichtung nach der Erfindung. Fig. 18 zeigt die Wrasenerfassungseinrichtung nach Fig. 17 in Vorderansicht. Fig. 17 zeigt die Wrasenerfassungseinrichtung in gleicher Darstellung wie die Wrasenerfassungseinrichtung 24 in Fig. 5. In Fig. 17 sind gleiche Teile wie in Fig. 5 mit gleichen Bezugszahlen versehen und werden hier nicht nochmals beschrieben.

Der Arbeitstisch 95 hat oben eine Tischplatte 97, über deren rückwärtige Längsseite sich die Ausnehmung 74 mit der Lufteintrittsöffnung 70 erstreckt. In der Ausnehmung 74 ist statt der Fettfilter 60, 72 wie bei der Ausführungsform nach Fig. 5 ein Grobpartikelfilter 96 angeordnet, bei dem es sich vorzugsweise um einen Filter aus Vliesstoff handelt.

An dieser Stelle sei abschließend noch erwähnt, dass es die beträchtliche Größe der bei der Erfindung eingesetzten quaderförmigen Abluftbox 50 ermöglicht, beispielshalber nur deren Boden mit einer Abluftöffnung 56a zu versehen und diese mit einem Geruchsfilter 62a abzudecken, um eine ausreichende Verringerung der mittleren Luftgeschwindigkeit der aus der Abluftbox austretenden Abluft zu erzielen. Die beiden vertikalen Seitenflächen und die horizontale obere Seitenfläche der Abluftbox 50 können demgemäß auf der Innenseite mit Schalldämmmaterial beklebt werden, so dass die Behaglichkeit in der Umgebung einer Ausgabeanlage 20 oder eines Arbeitstisches 95 auch nicht durch störendes Geräusch des Gebläses 52 oder des Abluftstroms beeinträchtigt wird.

## Patentansprüche

1. Wrasenerfassungseinrichtung für Küchen und Ausgabeanlagen, zum Erfassen von wenigstens mit Gerüchen oder Wrasen beladender Luft an einem Arbeitsplatz, insbesondere einem mit thermischen Geräten ausgestatten Arbeitsplatz, mit einem Kanalsystem, das von einer Absaugöffnung zu wenigstens einer Abluftöffnung führt wobei Abluft als Umluft in den Raum geführt wird;
mit einem in dem Kanalsystem angeordneten Sauggebläse und
mit einer in dem Kanalsystem angeordneten Filtereinrichtung mit wenigstens einem Vorfilter und wenigstens einem Geruchsfilter,
wobei die Absaugöffnung (54) auf Höhe des Arbeitsplatzes positionierbar oder positioniert ist
wobei das Kanalsystem (44) stromabwärts von dem Gebläse (52) als eine quaderförmige Abluftbox (50) ausgebildet ist,
**dadurch gekennzeichnet, dass** der Wert der mittleren Luftgeschwindigkeit stromabwärts der Abluftöffnung auf einen niedrigen Wert von höchstens 0,6 m/s eingestellt ist, indem die quaderförmige Abluftbox (50) Seitenflächen hat, wobei eine der Seitenflächen eine Lufteinströmöffnung aufweist, mit der die stromabwärtige Seite des Gebläses (52) verbunden ist, wobei die übrigen Seitenflächen wahlweise jeweils als eine durch einen Geruchsfilter (62; 62a - 62d; 94) abgedeckte Abluftöffnung (56; 56a - 56d; 92) ausgebildet sind, und wobei der gewünschte Wert der mittleren Luftgeschwindigkeit dadurch eingestellt ist, dass zum Abdecken der oder jeder Abluftöffnung der Geruchsfilter mit entsprechendem Luftwiderstand gewählt ist.

2. Wrasenerfassungseinrichtung nach Anspruch 1, **dadurch gekennzeichnet, dass** das Gebläse (52) auf seiner stromabwärtigen Seite direkt mit der Abluftbox (50) verbunden ist.

3. Wrasenerfassungseinrichtung nach Anspruch 1, **dadurch gekennzeichnet, dass** das Kanalsystem (44) einen das Gebläse (52) mit der Abluftbox (50) verbindenden Zuluftkanal (48, 48') aufweist.

4. Wrasenerfassungseinrichtung nach Anspruch 1, **dadurch gekennzeichnet, dass** das Gebläse (52) mit der Abluftbox (50) kombiniert ist.

5. Wrasenerfassungseinrichtung nach einem der Ansprüche 1 bis 4, **dadurch gekennzeichnet, dass** die oder jede Abluftöffnung (56; 56a - 56d; 92) mit einem Gitter (57) als Widerlager für den Geruchsfilter (62; 62a - 62d; 94) versehen ist.

6. Wrasenerfassungseinrichtung nach einem der Ansprüche 1 bis 5, **dadurch gekennzeichnet, dass** der Geruchsfilter (62; 62a - 62d; 94) aus einer flexiblen Matte besteht, die auf die Abluftöffnung (56; 56a - 56d; 92) auflegbar oder aufgelegt ist.

7. Wrasenerfassungseinrichtung nach Anspruch 6, **dadurch gekennzeichnet, dass** der Geruchsfilter (62; 62a - 62d; 94) aus offenzelligem Schaumstoff besteht, der mit Aktivkohle beschichtet ist.

8. Wrasenerfassungseinrichtung nach einem der Ansprüche 1 bis 7, **dadurch gekennzeichnet, dass** der Geruchsfilter (62; 62a - 62d; 94) aus einer Kassette besteht, die Filtermaterial enthält.

9. Wrasenerfassungseinrichtung nach einem der Ansprüche 1 bis 8, **dadurch gekennzeichnet, dass** die Abluftbox (50) mit einer Klappe (66) versehen ist, die sich zum Einlegen und Herausnehmen des Geruchsfilters (62; 62a - 62d; 94) öffnen lässt.

10. Wrasenerfassungseinrichtung nach einem der Ansprüche 1 bis 9, dadurch ge-kennzeichnet, dass das Kanalsystem (44) im Bereich der Absaugöffnung (54) als eine Hutze (46) ausgebildet ist.

11. Wrasenerfassungseinrichtung nach Anspruch 10, **dadurch gekennzeichnet, dass** die Hutze (46) ein gesondert ausgebildeter Modul ist.

12. Wrasenerfassungseinrichtung nach Anspruch 10 oder 11, **dadurch gekennzeichnet, dass** das Gebläse (52) in die Hutze (46) integriert ist.

13. Wrasenerfassungseinrichtung nach einem der Ansprüche 1 bis 12, **dadurch gekennzeichnet, dass** der Vorfilter (60) in dem Kanalsystem (44) unmittelbar neben der Absaugöffnung (54) angeordnet ist.

14. Wrasenerfassungseinrichtung nach Anspruch 13 und einem der Ansprüche 10 bis 12, **dadurch gekennzeichnet, dass** der Vorfilter (60) in der Hutze (46) angeordnet ist.

15. Wrasenerfassungseinrichtung nach Anspruch 13, **dadurch gekennzeichnet, dass** der Vorfilter (60) in dem Zuluftkanal (48) angeordnet ist.

16. Wrasenerfassungseinrichtung nach Anspruch 3 und einem der Ansprüche 4 bis 14, **dadurch gekennzeichnet, dass** der Zuluftkanal (48') aus wenigstens einem biegsamen Schlauch besteht.

17. Wrasenerfassungseinrichtung nach einem der Ansprüche 1 bis 16, **dadurch gekennzeichnet, dass** der Vorfilter ein Fettfilter (60) ist.

18. Wrasenerfassungseinrichtung nach Anspruch 17, **dadurch gekennzeichnet, dass** der Fettfilter (60) ein Wirbelstromfilter ist.

19. Wrasenerfassungseinrichtung nach einem der Ansprüche 1 bis 16, **dadurch gekennzeichnet, dass** der Vorfilter ein Grobpartikelfilter (96) ist oder einen Grobpartikelfilter (96) aufweist.

20. Wrasenerfassungseinrichtung nach Anspruch 19, **dadurch gekennzeichnet, dass** der Grobpartikelfilter (96) ein Filter aus Vliesstoff ist.

21. Wrasenerfassungseinrichtung nach den Ansprüchen 3 und 10 und einem der übrigen vorhergehenden Ansprüche, **dadurch gekennzeichnet, dass** der Zuluftkanal (48) und die Abluftbox (50) oberhalb der Hutze (46) angeordnet sind.

22. Wrasenerfassungseinrichtung nach Anspruch 21, **dadurch gekennzeichnet, dass** wenigstens eine der stromaufwärtigen Seite der Absaugöffnung (54) zugewandte Seitenfläche der Abluftbox (50) als eine durch den Geruchsfilter (62a) abdeckbare oder abgedeckte Abluftöffnung (56a) ausgebildet ist.

23. Wrasenerfassungseinrichtung nach Anspruch 21, **dadurch gekennzeichnet, dass** wenigstens eine der Hutze (46) zugewandten Seitenfläche einer an die stromaufwärtige Seite der Abluftbox (50) angeschlossenen Haube (90) mit einer durch einen Geruchsfilter (94) abgedeckten Abluftöffnung (92) versehen ist.

## Claims

1. A cooking fumes collector for kitchens and distribution facilities for collecting air laden with at least odours or fumes at a workplace, particularly a workplace equipped with thermal devices, comprising a duct system leading from a suction opening to at least one air outlet opening, wherein return air is guided into the room as circulating air;
a suction fan disposed in the duct system; and
a filter arrangement disposed in the duct system and including at least one pre-filter and at least one odour filter,
wherein the suction opening (54) can be or is positioned at the level of the workplace,
wherein the duct system (44) is formed as a cuboidal return air box (50) downstream of the fan (52),
**characterised in that** the value of the mean air velocity downstream of the air outlet opening is set to a low value of a maximum of 0.6 m/s by the cuboidal return air box (50) having side surfaces,
wherein one of the side surfaces has an air inflow opening to which the downstream side of the fan (52) is connected, wherein the remaining side surfaces are optionally formed as an air outlet opening (56; 56a -56d; 92) covered by an odour filter (62; 62a -62d; 94), respectively, and wherein the desired value of the mean air velocity is set by the odour filter having the appropriate air resistance being selected for covering the or each air outlet opening.

2. The cooking fumes collector according to claim 1, **characterised in that** the fan (52) is directly connected to the return air box (50) on its downstream side.

3. The cooking fumes collector according to claim 1, **characterised in that** the duct system (44) includes an air supply duct (48, 48') connecting the fan (52) to the return air box (50).

4. The cooking fumes collector according to claim 1, **characterised in that** the fan (52) is combined with the return air box (50).

5. The cooking fumes collector according to one of the claims 1 to 4, **characterised in that** the or each air outlet opening (56; 56a - 56d; 92) is provided with a lattice (57) as an abutment for the odour filter (62; 62a - 62d; 94).

6. The cooking fumes collector according to one of the claims 1 to 5, **characterised in that** the odour filter (62; 62a - 62d; 94) is formed of a flexible mat which can be or is placed on the air outlet opening (56; 56a - 56d; 92).

7. The cooking fumes collector according to claim 6, **characterised in that** the odour filter (62; 62a - 62d; 94) is made of an open-celled foamed material coated with activated carbon.

8. The cooking fumes collector according to one of the claims 1 to 7, **characterised in that** the odour filter (62; 62a - 62d; 94) consists in a cartridge containing the filter material.

9. The cooking fumes collector according to one of the claims 1 to 8, **characterised in that** the return air box (50) is provided with a flap (66) which can be opened for inserting and removing the odour filter (62; 62a - 62d; 94).

10. The cooking fumes collector according to one of the claims 1 to 9, **characterised in that** the duct system (44) is formed as a scoop (46) in the area of the suction opening (54).

11. The cooking fumes collector according to claim 10, **characterised in that** the scoop (46) is a separately formed module.

12. The cooking fumes collector according to claim 10 or 11, **characterised in that** the fan (52) is integrated in the scoop (46).

13. The cooking fumes collector according to one of the claims 1 to 12, **characterised in that** the pre-filter (60) is disposed in the duct system (44) directly adjacent to the suction opening (54).

14. The cooking fumes collector according to claim 13 and one of the claims 10 to 12, **characterised in that** the pre-filter (60) is disposed in the scoop (46).

15. The cooking fumes collector according to claim 13, **characterised in that** the pre-filter (60) is disposed in the air supply duct (48).

16. The cooking fumes collector according to claim 3 and one of the claims 4 to 14, **characterised in that** the air supply duct (48') consists of at least one flexible tube.

17. The cooking fumes collector according to one of the claims 1 to 16, **characterised in that** the pre-filter is a grease filter (60).

18. The cooking fumes collector according to claim 17, **characterised in that** the grease filter (60) is a cyclone filter.

19. The cooking fumes collector according to one of the claims 1 to 16, **characterised in that** the pre-filter is a coarse particle filter (96) or comprises a coarse particle filter (96).

20. The cooking fumes collector according to claim 19, **characterised in that** the coarse particle filter (96) is a filter made of a non-woven fabric.

21. The cooking fumes collector according to claims 3 and 10 and one of the other preceding claims, **characterised in that** the air supply duct (48) and the return air box (50) are arranged above the scoop (46).

22. The cooking fumes collector according to claim 21, **characterised in that** at least a side surface of the return air box (50) facing the upstream side of the suction opening (54) is formed as an air outlet opening (56a) coverable or covered by the odour filter (62a).

23. The cooking fumes collector according to claim 21, **characterised in that** at least a side surface facing the scoop (46) of a cover (90) connected to the upstream side of the return air box (50) is provided with an air outlet opening (92) covered by an odour filter (94).

## Revendications

1. Dispositif de captage de buées de cuisson pour cuisines et installations de sortie destiné à capter au moins de l'air chargé d'odeurs ou de buées à une place de travail, notamment à une place de travail équipée d'appareils thermiques, avec un système de canalisation, qui mène d'une ouverture d'aspiration à au moins une ouverture
d'évacuation d'air, l'air évacué étant dirigé dans la pièce comme de l'air ambiant ;
avec une soufflante aspirante disposée dans le système de canalisation et avec un dispositif de filtrage disposé dans le système de canalisation avec au moins un préfiltre et au moins un filtre à odeurs,
l'ouverture d'aspiration (54) pouvant être ou étant positionnée à la hauteur de la place de travail
le système de canalisation (44) étant constitué comme une boîte d'évacuation d'air (50) en forme de parallélépipède en aval de la soufflante (52),
**caractérisé en ce que** la valeur de la vitesse de l'air moyenne en aval de l'ouverture d'évacuation d'air est réglée sur une valeur faible de 0,6 m/s maximum, alors que la boîte d'évacuation d'air (50) en forme de parallélépipède a des surfaces latérales,
une des surfaces latérales présentant une ouverture d'entrée d'air avec laquelle le côté en aval de la soufflante (52) est raccordé, les surfaces latérales restantes sont sélectivement constituées comme une ouverture d'évacuation d'air (56 ; 56a - 56d ; 92) recouverte d'un filtre à odeurs (62 ; 62a - 62d ; 94), et la valeur souhaitée de la vitesse de l'air moyenne étant réglée de telle sorte que le filtre à odeurs est choisi avec la résistance d'air correspondante pour recouvrir chaque ou l'ouverture d'évacuation d'air.

2. Dispositif de captage de buées de cuisson selon la revendication 1, **caractérisé en ce que** la soufflante (52) est raccordée directement à la boîte d'évacuation d'air (50) sur son côté en aval.

3. Dispositif de captage de buées de cuisson selon la revendication 1, **caractérisé en ce que** le système de canalisation (44) présente un canal d'entrée d'air (48, 48') raccordant la boîte d'évacuation d'air (50) à la soufflante (52).

4. Dispositif de captage de buées de cuisson selon la revendication 1, **caractérisé en ce que** la soufflante (52) est combinée à la boîte d'évacuation d'air (50).

5. Dispositif de captage de buées de cuisson selon l'une des revendications 1 à 4, **caractérisé en ce que** chaque ou l'ouverture d'évacuation d'air (56 ; 56a - 56d ; 92) est prévue avec une grille (57) comme aboutement pour le filtre à odeurs (62 ; 62a-62d ; 94).

6. Dispositif de captage de buées de cuisson selon l'une des revendications 1 à 5, **caractérisé en ce que** le filtre à odeurs (62 ; 62a - 62d ; 94) est constitué d'une natte flexible qui peut être posée ou est posée sur l'ouverture d'évacuation d'air (56 ; 56a-56d ; 92).

7. Dispositif de captage de buées de cuisson selon la revendication 6, **caractérisé en ce que** le filtre à odeurs (62 ; 62a - 62d ; 94) est constitué de mousse à alvéoles ouverts qui est recouverte de charbon actif.

8. Dispositif de captage de buées de cuisson selon l'une des revendications 1 à 7, **caractérisé en ce que** le filtre à odeurs (62 ; 62a - 62d ; 94) est constitué d'une cassette qui comprend du matériel filtrant.

9. Dispositif de captage de buées de cuisson selon l'une des revendications 1 à 8, **caractérisé en ce que** la boîte d'évacuation d'air (50) est prévue avec un clapet (66) qui s'ouvre pour poser ou retirer le filtre à odeurs (62 ; 62a - 62d ; 94).

10. Dispositif de captage de buées de cuisson selon l'une des revendications 1 à 9, **caractérisé en ce que** le système de canalisation (44) est constitué comme une hotte d'admission d'air (46) dans la zone de l'ouverture d'aspiration (54).

11. Dispositif de captage de buées de cuisson selon la revendication 10, **caractérisé en ce que** la hotte d'admission d'air (46) est un module de forme particulière.

12. Dispositif de captage de buées de cuisson selon la revendication 10 ou 11, **caractérisé en ce que** la soufflante (52) est intégrée dans la hotte d'admission d'air (46).

13. Dispositif de captage de buées de cuisson selon l'une des revendications 1 à 12, **caractérisé en ce que** le préfiltre (60) est disposé dans le système de canalisation (44) juste à côté de l'ouverture d'aspiration (54).

14. Dispositif de captage de buées de cuisson selon la revendication 13 et l'une des revendications 10 à 12, **caractérisé en ce que** le préfiltre (60) est disposé dans la hotte d'admission d'air (46).

15. Dispositif de captage de buées de cuisson selon la revendication 13, **caractérisé en ce que** le préfiltre (60) est disposé dans le canal d'entrée d'air (48).

16. Dispositif de captage de buées de cuisson selon la revendication 3 et l'une des revendications 4 à 14, **caractérisé en ce que** le canal d'entrée d'air (48') est composé d'au moins un tuyau flexible.

17. Dispositif de captage de buées de cuisson selon l'une des revendications 1 à 16, **caractérisé en ce que** le préfiltre est un filtre à graisse (60).

18. Dispositif de captage de buées de cuisson selon la revendication 17, **caractérisé en ce que** le filtre à graisse (60) est un filtre à courants de Foucault.

19. Dispositif de captage de buées de cuisson selon l'une des revendications 1 à 16, **caractérisé en ce que** le préfiltre est un filtre à particules grossières (96) ou présente un filtre à particules grossières (96).

20. Dispositif de captage de buées de cuisson selon la revendication 19, **caractérisé en ce que** le filtre à particules grossières (96) est un filtre en non-tissé.

21. Dispositif de captage de buées de cuisson selon les revendications 3 et 10 et selon l'une des autres revendications précédentes, **caractérisé en ce que** le canal d'entrée d'air (48) et la boîte d'évacuation d'air (50) sont disposés au-dessus de la hotte d'admission d'air (46).

22. Dispositif de captage de buées de cuisson selon la revendication 21, **caractérisé en ce qu'**au moins une surface latérale de la boîte d'évacuation d'air (50) orientée vers le côté en amont de l'ouverture d'aspiration (54) est constituée comme une ouverture d'évacuation d'air (56a) recouverte ou pouvant être recouverte par le filtre à odeurs (62a).

23. Dispositif de captage de buées de cuisson selon la revendication 21, **caractérisé en ce qu'**au moins une surface latérale orientée vers la hotte d'admission d'air (46) d'une chappe (90) raccordée au côté en amont de la boîte d'évacuation d'air (50) est prévue avec une ouverture d'évacuation d'air (92) recouverte par un filtre à odeurs (94).
